Europäisches Patentamt

European Patent Office

Office européen des brevets

(11) Veröffentlichungsnummer: **0 306 559**
**A1**

(12) **EUROPÄISCHE PATENTANMELDUNG**

(21) Anmeldenummer: 87118020.4

(22) Anmeldetag: 05.12.87

(51) Int. Cl.⁴: **C02F 1/24 , B03D 1/14 ,**
**B01D 17/035 , B01D 17/05**

(30) Priorität: 08.09.87 DE 3729995

(43) Veröffentlichungstag der Anmeldung:
**15.03.89 Patentblatt 89/11**

(84) Benannte Vertragsstaaten:
**AT CH DE ES FR GB GR IT LI NL SE**

(71) Anmelder: **RWO Maschinenfabrik Armaturen-**
**und Apparatebau GmbH**
**Am Dammacker 12**
**D-2800 Bremen 1(DE)**

(72) Erfinder: **Kupka, Karl-Heinz**
**Ossenhöfe 6 G**
**D-2804 Lilienthal(DE)**
Erfinder: **Wildgrube, Rüdiger**
**Messterfeld 1**
**D-2807 Achim 1(DE)**

(74) Vertreter: **Goddar, Heinz J., Dr. et al**
**FORRESTER & BOEHMERT**
**Widenmayerstrasse 4/I**
**D-8000 München 22(DE)**

(54) **Flotationsanlage.**

(57) Flotationsanlage mit einem mit einer Dispersion-Zuleitung (10) versehenen Sammelbehälter (12), einem Flotationsbehälter (14), einer Einrichtung (16) zur Einbringung von Luft in die zu reinigende Dispersion, einer Einrichtung (18) zum dosierten Zugeben von Spaltmittel und einer Flotatentwässerungseinrichtung (20), mit einer Mischstrecke (22), die über eine erste Zuleitung (24) mit dem Sammelbehälter (10) verbunden ist, über eine zweite Zuleitung (26) mit der ERinrichtung (18) zum dosierten Zuführen von Spaltmittel verbunden ist, über eine dritte Zuleitung (28) mit der Lufteinbringungseinrichtung (16) verbunden ist, und über eine vierte Zuleitung (30) mit dem Flotationsbehälter (14) verbunden ist, wobei die Zuleitungen (24, 26, 28, 30) in dieser Reihenfolge stromabwärts gesehen an die Mischstrecke (22) angesetzt sind.

FIG.1

## Flotationsanlage

Die Erfindung betrifft eine Flotationsanlage mit einem mit einer Dispersion-Zuleitung versehenen Sammelbehälter, einem Flotationsbehälter, einer Einrichtung zur Einbringung von Luft in die zu reinigende Dispersion, einer Einrichtung zum Einbringen von Spaltmittel und einer Flotatentwässerungseinrichtung.

Flotationsanlagen dienen zur Trennung von wässrigen Dispersionen mit Hilfe von in einem Flotationsbehälter aufsteigenden Luftblasen, wobei die in die zu trennende Dispersion eingebrachten Luftblasen an den hydrophoben Teilchen anhaften und diese zur Wasseroberfläche tragen.

Der Erfindung liegt die Aufgabe zugrunde, eine Flotationsanlage zu schaffen, die automatisch, wartungsarm und wirtschaftlich arbeitet.

Erfindungsgemäß wird diese Aufgabe dadurch gelöst, daß eine Mischstrecke vorgesehen ist, die über eine erste Zuleitung mit dem Sammelbehälter verbunden ist, über eine zweite Zuleitung mit der Einrichtung zum Zuführen von Spaltmittel verbunden ist, über eine dritte Zuleitung mit der Lufteinbringungseinrichtung verbunden ist, und über eine vierte Zuleitung mit dem Flotationsbehälter verbunden ist, wobei die Zuleitungen in dieser Reihenfolge stromabwärts gesehen an die Mischstrecke angesetzt sind.

Vorzugsweise ist vorgesehen, daß die Lufteinbringungseinrichtung über eine fünfte Zuleitung mit dem Flotationsbehälter verbunden ist und von diesem mit Reinwasser versorgt wird.

Weiter wird vorgeschlagen, daß die Lufteinbringungs-Einrichtung durch eine elektromotorisch angetriebene Wasserpumpe, eine auf der Saugseite der Wasserpumpe angeordnete Wasserstrahl-Vakuumpumpe und einem Entspannungs-Ventil gebildet wird.

Die Erfindung wird im folgenden anhand einer Zeichnung erläutert. Dabei zeigt:

Fig. 1 ein Prozeßdiagramm der Anlage, und

Fig. 2 eine Darstellung der Lufteinbringungs-Einrichtung

Die Anlage besteht aus einem mit einer Zuleitung 10 versehenen Sammelbehälter 12. Von dem Sammelbehälter 12 führt eine mit einer Pumpe 34 versehene erste Zuleitung 24 zu einer Mischstrecke 22. Benachbart zu der Mündung der Zuleitung 24 mündet eine mit einer Pumpe 36 versehene zweite Zuleitung 26, die dosiert Spaltmittel aus einem Spaltmittelbehälter 18 der Mischstrecke 22 zuführt.

Stromabwärts mündet in die Mischstrecke 22 eine dritte, mit einer Pumpe 38 versehene dritte Zuleitung 28, die in einer Einrichtung 16 mit Luft angereichertes Wasser der Mischstrecke 22 zuführt. In der Mischstrecke 22 flocken die aus dem Wasser zu trennenden Stoffe aufgrund des zugegeben Spaltmittels, die so gebildete Suspension wird mit dem sodann in die Mischstrecke 22 eingeleiteten, mit Luft angereicherten Reinwasser über eine vierte Zuleitung 30 einem Flotationsbehälter 14 zugeführt. In diesem Flotationsbehälter 14 wird die Suspension getrennt, das Reinwasser wird zum Teil über eine Zuleitung 32 der Lufteinbringungseinrichtung 16 zugeführt, zum Teil in einen Kanal abgeführt. Das Flotat wird über eine sechste Leitung 34 zu einer Flotatentwässerungseinrichtung 20 geführt, in der sich aus dem Flotat abgeschiedenes Wasser über eine sechste Leitung 36 wieder dem Sammelbehälter 12 zugeführt wird.

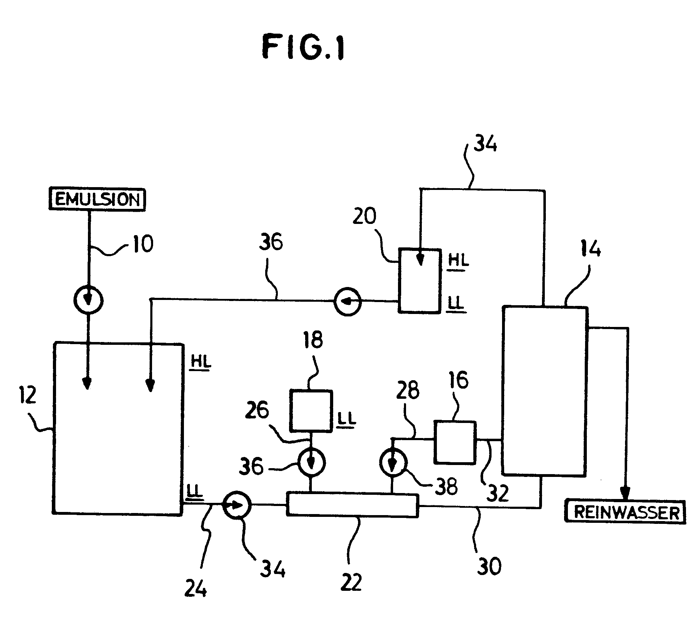

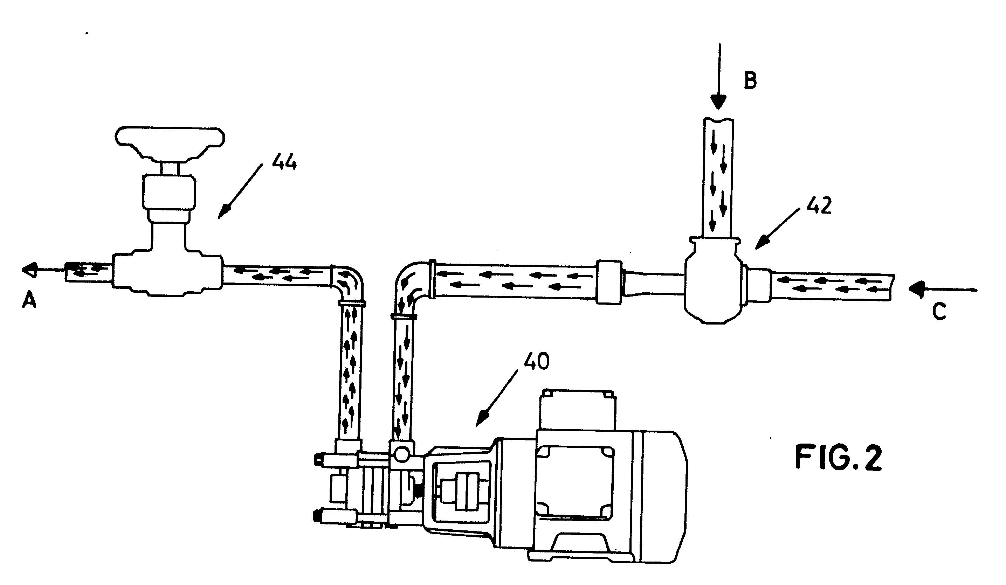

Die in Fig. 2 gezeigte Einrichtung 16 zum Anreichern der von dem Flotationsbehälter 14 der Luftanreiche rungs-Einrichtung 16 zugeführten Reinwassers besteht aus einer - vorzugsweise elektromotorisch angetriebenen - Wasserpumpe 40, einer af deren Saugseite angeordneten Wasserstrahl-Vakuumpumpe 42 und einem Entspannungs-Ventil 44. Die Wasserstrahl-Vakuumpumpe 42 ist auf der mit "C" bezeichneten Seite in der Nähe des Bodens des Flotationsbehälters 14 an diesen angeschlossen. Die mit "B" bezeichnete Seite kommuniziert mit der Atmosphäre. Der Ausgang dieser Wasserstrahl-Vakuumpumpe 42 führt zu der Wasserpumpe 40, di aus dem Flotationsbehälter 14 über die Wasserstrahl-Vakuumpumpe 42 Wasser ansaugt. In der Wasserstrahl-Vakuumpumpe 42 wird Luft in den Wasserstrahl eingesogen. Diese Wasser/Luft-Dispersion wird von der Wasserpumpe 40 über ein Entspannungs-Ventil 44 über deren mit "A" bezeichneten Seite zur Mischstrecke 22 (Fig. 1) gedrückt. In dem Entspannungs-Ventil 44 wird der Druck, der zwischen der Wasserpumpe 40 und dem Entspannungsventil 44 etwa 6 bar beträgt, auf etwa 1,5 bar reduziert. Dies bewirkt, daß die zuvor im Wasser gelöste Luft wieder frei wird und in Form von Mikroblasen den gewünschten Auftriebseffekt in dem zu behandelnden Wasser erfolgt.

Die vorgeschlagene Vorrichtung hat den Vorteil, daß das notwendige Wasser dem gereinigten Abwasser aus dem Flotationsbehälter 14 entnommen und dem zu behandelnden Rohwasser in der Mischstrecke 22 wieder zugeführt wird. Zusätzliches Wasser wird somit nicht benötigt.

Vorteilhaft ist weiter, daß die ansonsten erforderlichen Einrichtungen zur Erzeugung von Druckluft, nämlich ein Kompressor mit Zusatzeinrichtungen wie Druckbehälter und dgl., verzichtet werden kann. Dies führt neben Einsparung von Energie und Platz zu einer Verminderung der Umweltbelastung, da Kompressorenkondensat nicht anfällt.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Ansprüche

1. Flotationsanlage mit einem mit einer Dispersion-Zuleitung (10) versehenen Sammelbehälter (12), einem Flotationsbehälter (14), einer Einrichtung (16) zur Einbringung von Luft in die zu reinigende Dispersion, einer Einrichtung (18) zum dosierten Zuführen von Spaltmittel und einer Flotatentwässerungseinrichtung (20),
dadurch gekennzeichnet, daß eine Mischstrecke (22) vorgesehen ist, die
- über eine erste Zuleitung (24) mit dem Sammelbehälter (10) verbunden ist,
- über eine zweite Zuleitung (26) mit der Einrichtung (18) zum Zuführen von Spaltmittel verbunden ist,
- über eine dritte Zuleitung (28) mit der Lufteinbringungseinrichtung (16) verbunden ist, und
- über eine vierte Zuleitung (30) mit dem Flotationsbehälter (14) verbunden ist, wobei
- die Zuleitungen (24, 26, 28, 30) in dieser Reihenfolge stromabwärts gesehen an die Mischstrecke (22) angesetzt sind.

2. Flotationsanlage nach Anspruch 1, dadurch gekennzeichnet, daß die Lufteinbringungseinrichtung (16) über eine fünfte Zuleitung (32) mit dem Flotationsbehälter (14) verbunden ist und von diesem mit Reinwasser versorgt wird.

3. Flotationsanlage nach Anspruch 1 oder Anspruch 2, dadurch gekennzeichnet, daß die Lufteinbringungs-Einrichtung (16) durch eine elektromotorisch angetriebene Wasserpumpe (40), eine auf der Saugseite der Wasserpumpe (40) angeordnete Wasserstrahl-Vakuumpumpe (42) und ein Entspannungs-Ventil (44) gebildet wird.

# FIG.1

FIG.2

EP 0 306 559 A1

Europäisches
Patentamt

**EUROPÄISCHER RECHERCHENBERICHT**

Nummer der Anmeldung

EP 87 11 8020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WATER RESEARCH, Band 13, Nr. 4, April 1979, Seiten 385-391; A. MATHEWS et al.: "Treatment of oil contaminated waste waters by foam fractionation" * Seite 386, Figur 1; Seiten 386-387, "Experimental equipment and procedures" * | 1 | C 02 F 1/24 B 03 D 1/14 B 01 D 17/035 B 01 D 17/05 |
| | --- | | |
| X | US-A-4 001 114 (J.J. JOSEPH et al.) * Zusammenfassung; Abbildung; Spalten 4-5, "Example 1" * | 1 | |
| Y | | 2,3 | |
| | --- | | |
| X | US-A-2 047 989 (W. WOELFLIN) * Seite 3, rechte Spalte, Zeile 67 - Seite 4, linke Spalte, Zeile 27; Abbildung 2 * | 1 | |
| | --- | | |
| Y | EP-A-0 035 243 (BAYER AG) * Zusammenfassung; Seite 10, Zeile 24 - Seite 11, Zeile 25; Abbildungen 5,6 * | 3 | |
| | --- | | **RECHERCHIERTE SACHGEBIETE (Int. Cl.4)** |
| Y | CHEMICAL ENGINEERING DESKBOOK, Band 82, Nr. 21, 6. Oktober 1975, Seiten 49-61; L.D. LASH et al.: "Primary-waste-treatment methods" * Seiten 57-58, "Dissolved-air flotation"; Seite 57, Abbildung 10; Seite 58, Abbildung 11 * | 2 | B 01 D B 03 D C 02 F |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 22-06-1988 | VAN IDDEKINGE R.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...........................................................................................
& : Mitglied der gleichen Patentfamilie, übereinstimmendes Dokument

EPO FORM 1503 03.82 (P0403)